# EUROPÄISCHE PATENTSCHRIFT

(11) **EP 1 334 020 B1**
(45) Veröffentlichungstag und Bekanntmachung des Hinweises auf die Patenterteilung: **26.01.2005**
(21) Anmeldenummer: 01996489.9
(22) Anmeldetag: 07.11.2001
(51) Int. Cl.: B62D 6/02

(54) **VERFAHREN ZUR ERMITTLUNG DER SOLL-DREHGESCHWINDIGKEIT EINES ELEKTROMOTORS FÜR EINE HYDRAULIKPUMPE UND LENKEINRICHTUNG FÜR EIN FAHRZEUG**
METHOD FOR DETERMINING THE THEORETICAL ROTATIONAL VELOCITY OF AN ELECTRICAL MOTOR DRIVING A VEHICLE'S HYDRAULIC PUMP AND STEERING SYSTEM
PROCEDE POUR DETERMINER LA VITESSE DE ROTATION THEORIQUE D'UN MOTEUR ELECTRIQUE POUR UNE POMPE HYDRAULIQUE ET SYSTEME DE DIRECTION DE VEHICULE

(30) Priorität: 15.11.2000 DE 10056588
(43) Veröffentlichungstag der Anmeldung: 13.08.2003
(73) Patentinhaber: ZF Lenksysteme GmbH, 73527 Schwäbisch Gmünd (DE)
(72) Erfinder: MÜLLER, Gerd, 73540 Heubach (DE); HIEGLER, Stephan, 73525 Schwäbisch Gmünd (DE)
(86) Internationale Anmeldenummer: PCT/EP2001/012845
(87) Internationale Veröffentlichungsnummer: WO 2002/040338

(56) Entgegenhaltungen:
- DE-A- 3 920 862
- DE-A- 4 231 328
- FR-A- 2 688 183

## Beschreibung

Elektrohydraulische Druckversorgungseinheiten sind im Wesentlichen aus der Stationär- Mobilhydraulik bekannt.
Ähnliche Konzeptionen sind auch für Anwendungen in Lenksystemen bekannt, beispielsweise aus DE 197 35 647 C1, DE 198 20 381 A1, DE 198 18 139 A1.

Die Erfindung geht von der Gattung aus, wie im unabhängigen Anspruch 1 bzw. 2 angegeben und in der DE 39 20 862 A1 beschrieben. Bevorzugtes Einsatzgebiet sind hydraulische Lenkeinrichtungen mit einem Steuerventil mit offener Mitte. Eine gattungsgemäße Lenkeinrichtung bewirkt einen niedrigen Energieverbrauch, wenn die Drehzahl (Drehgeschwindigkeit) des Elektromotors bei höheren Fahrzeuggeschwindigkeiten reduziert wird. Bekannt sind Weiterentwicklungen zur Verbesserung des Bedienungskomforts (EP 673 328 B1) und des Gesamtwirkungsgrades (EP 741 068 A2).

Bekannte Systeme in Lenkanwendungen, die auf gängige Fahrzeugsignale reagieren (z.B. Fahrgeschwindigkeit, Lenkgeschwindigkeit etc.) verursachen beim Erreichen stationärer Betriebszustände wechselnde Handkräfte. Beispielsweise bei konstanter Kurvenfahrt bzw. Druckhalten im Stand wird der Volumenstrom aufgrund fehlender Lenkgeschwindigkeitsänderung abgesenkt. Dies hat eine wechselnde Handkraft zur Folge. Dynamische Druckänderungen (z.B. Fahrbahnanregungen bei Lenkanwendungen) verursachen Rückwirkungen (Stößigkeiten), die von gängigen Regelprinzipien nicht immer ausgelichen werden können. Wird ein Ausgleich versucht, so ergibt sich bei gängigen Regelprinzipien eine höherer Stand-by-Volumenstrom mit höherer Stand-by-Leistungaufnahme.

### Vorteile der Erfindung

Neu ist in Verbindung mit weiteren Merkmalen die Verwendung des aktuellen Motorstromes mit entsprechenden Algorithmen als zusätzliche Steuergröße des Steuergerätes. (Der Motorstrom verhält sich im quasi statischen Zustand proportional zum hydraulischen Systemdruck und bei Lenkanwendung zum Lenkmoment). Insgesamt ist durch die Erfindung ein Regelprinzip geschaffen, das für jede Steuergröße (die proportional ist beispielsweise zu Lenkgeschwindigkeit, Motorstrom, Konstantanteil) durch verschiedene Algorithmen einen Ausgabeanteil (z.B. Drehzahl) ermittelt. Die Anteile werden summiert, und mit einer Bewertungsfunktion (z.B. Geschwindigkeitsfunktion) wird die erforderliche Ausgabegröße (= Sollwert) (z.B. Volumenstrom [entspricht der Soll-Drehzahl der Hydraulikpumpe und damit des Elektromotors]) errechnet.

Der Anmeldungsgegenstand mit den Merkmalen des Anspruches 1 bzw. 2 hat folgende Vorteile:

Bei kleiner oder geringer Lenk-Unterstützung einer Hilfskraftlenkung oder bei geringen Leistungsanfordrungen durch eine Fremdkraft- oder Überlagerungslenkung ist nur eine minimale Leistungsaufnahme erforderlich. Beim Erreichen stationärer Betriebszustände wird ausreichend Volumenstrom zur Verfügung gestellt, um wechselnde Handkräfte zu vermeiden.

Erreicht wird damit:
- eine Absenkung der Energieaufnahme im "Stand-by-Betrieb",
- ein Absenken der Energieaufnahme im Fahrzyklus,
- eine Absenkung des Temperaturniveaus,
- ein komfortables Lenkverhalten (geschwindigkeitsabhängige Lenkunterstützung),
- eine rückwirkungsfreie Drehzahlregulierung der Hydraulikpumpe.

Vorteilhafte Weiterbildungen der Erfindung sind in den abhängigen Ansprüchen angegeben, deren Merkmale auch, soweit sinnvoll, miteinander kombiniert werden können.

### Zeichnungen

Ein Ausführungsbeispiel der Erfindung ist in den Zeichnungen dargestellt und im Folgenden näher erläutert.

Schematisch ist gezeigt in
- Figur 1:: ein Blockschaltbild einer Steuereinrichtung für einen Elektromotor, der eine Hydraulikpumpe antreibt,
- Figur 2:: ein Blockschaltbild des in Figur 1 enthaltenen Steuergerätes ECU.

Im Wesentlichen gleiche Teile in unterschiedlichen Figuren sind mit gleichen Bezugszeichen versehen.

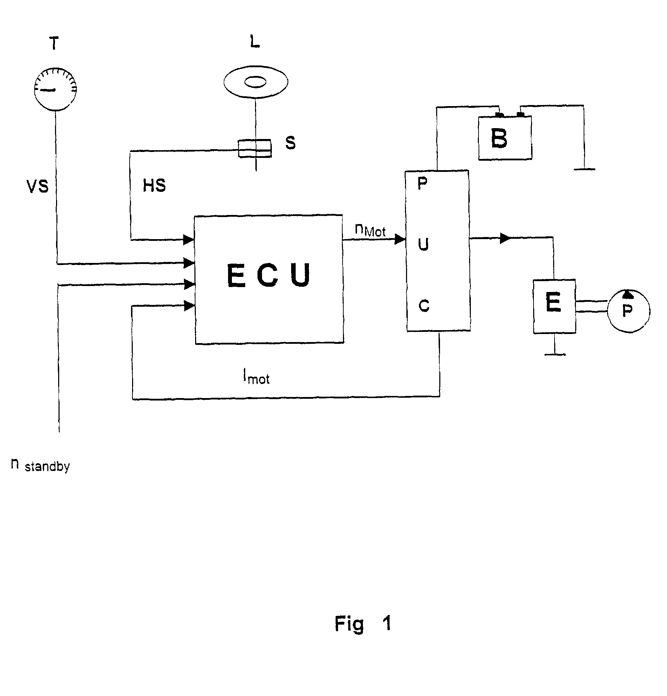

In Figur 1 treibt ein Elektromotor E eine Hydraulikpumpe P, die in einem Fahrzeug beispielsweise den Arbeitszylinder einer Hilfskraftlenkung über ein Steuerventil versorgen kann. Die Motorspannung ist von einem Motorregler PCU gesteuert, der seine Versorgungsspannung von einer Batterie B bezieht. Der Motorregler kann beispielsweise einen Pulslängenmodulator als steuerbaren Spannungswandler enthalten. Wenn der Elektromotor ein bürstenloser Gleichstrommotor ist, weist der Motorregler PCU auch noch Kommutatormittel auf.

Die Spannung, die der Motorregler PCU an den Elektromotor E abgibt, hängt von einem Sollwert n_{Mot} für die Drehgeschwindigkeit des Elektromotors E ab. Dieser Sollwert wird dem Motorregler von einem Steuergerät ECU geliefert, dessen Eingängen folgende Steuergrößen zugeführt werden:
a) Lenkwinkelgeschwindigkeit HS des Fahrzeugs, gemessen durch einen Sensor S an einem Lenkhandrad L,
b) Stand-by-Drehgeschwindigkeit n_{standby} der Hydraulikpumpe P,
c) Eingangsstrom I_{Mot} des Elektromotors E (oder gleichwertig: der von der Batterie B an den Motorregler PCU gelieferte Strom),
d) Fahrzeuggeschwindigkeit VS, gemessen durch ein Tachometer T.

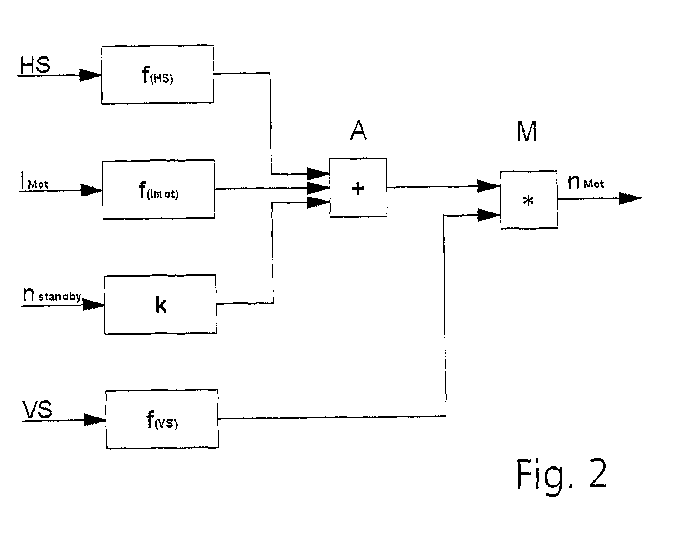

Die Steuergrößen a) bis c) sind gemäß Figur 2 im Steuergerät (ECU) über jeweils ein Übertragungsglied f_{(HS)}, f_{(Imot)}, k einem Addierer A zugeführt, der die von den Übertragungsgliedern kommenden Ausgabeanteile addiert. Der Ausgang des Addierers A ist mit einem ersten Eingang eines Multiplizierers M verbunden, der den Sollwert n_{Mot} für das Steuergerät (PCU in Figur 1) liefert. Ein zweiter Eingang des Multiplizierers M ist über ein viertes Übertragungsglied f_{(VS)} von einer vierten Steuergröße gespeist, die der Fahrzeuggeschwindigkeit VS proportional ist.

Das erste Übertragungsglied f_{(HS)} und das dritte Übertragungsglied k kann beispielsweise eine lineare Übertragungsfunktion haben, also die Lenkwinkelgeschwindigkeit HS bzw. die einmal festzulegende Stand-by-Drehzahl n_{standby} der Hydraulikpumpe P lediglich mit einem konstanten Faktor, insbesondere 1 multiplizieren.

Das zweite Übertragungsglied f_{(Imot)} enthält bevorzugt einen Tiefpass mit einer Zeitkonstante von beispielsweise 0,15 s.

Das vierte Übertragungsglied f_{(VS)} weist eine Übertragungsfunktion auf, durch welche dem zweiten Eingang des Motorreglers (M) mit steigender Fahrzeuggeschwindigkeit (VS) ein abfallendes Signal zugeführt wird. Insbesondere hat dieses Signal zwischen 0 und 50 km/h eine leicht fallende Tendenz, die sich zwischen 50 und 100 km/h verstärkt und die sich ab 100 km/h nochmals verstärkt. Es handelt sich also um eine mehrfach geknickte Kennlinie, die vereinfachend anstelle einer kontinuierlichen Kennlinie eingesetzt wird.

Besonders vorteilhaft wirkt sich aus, dass alle Steuergrößen a) bis c) mit dem fahrzeuggeschwindigkeitsabhängigen Signal multipliziert werden, das von der Kennlinie f_{(VS)} beeinflusst ist, insbesondere indem die Multiplikation (im Multiplizierer M) der von den Steuergrößen a) bis c) abgeleiteten Signale (= sogenannte Ausgabeanteile) erst nach deren Addition im Addierer A erfolgt.

Die Erfindung ist nicht nur bei Lenksystemen, sondern auch bei sonstigen hydraulischen Anwendungen in Kraftfahrzeugen wie z.B. Fahrwerkssystemen anwendbar.

## Patentansprüche

1. Verfahren zur Ermittlung der Soll-Drehgeschwindigkeit (n_{Mot}) eines Elektromotors (E), der eine Hydraulikpumpe (P) in einem Fahrzeug antreibt und der in Abhängigkeit von der Fahrzeuggeschwindigkeit (VS) gesteuert ist,
**dadurch gekennzeichnet, dass**
wenigstens drei Steuergrößen, die proportional sind zu folgenden Messgrößen:
a) Lenkwinkelgeschwindigkeit (HS) des Fahrzeugs,
b) Stand-by-Drehgeschwindigkeit (n_{standby}) der Hydraulikpumpe (P)
c) Eingangsstrom (I_{Mot}) des Elektromotors (E),
jeweils vor oder nach Beeinflussung durch zugehörige Übertragungsglieder (f_{(HS)}, f_{(Imot)}, k) mit einer Größe multipliziert werden, die mit steigender Fahrzeuggeschwindigkeit (VS) abnimmt.

2. Lenkeinrichtung für ein Fahrzeug, mit einer Hydraulikpumpe (P), die von einem Elektromotor (E) angetrieben ist, der in Abhängigkeit von der Fahrzeuggeschwindigkeit (VS) gesteuert ist,
**gekennzeichnet durch folgende Merkmale:**
• dem Elektromotor (E) ist ein Motorregler (PCU) vorgeschaltet, dem ein Sollwert (n_{Mot}) für die Motordrehgeschwindigkeit vorgegeben ist und der dementsprechend die Versorgungsspannung des Elektromotors (E) steuert,
• der Sollwert (n_{Mot}) wird von einem Steuergerät (ECU) geliefert, dem wenigstens drei Steuergrößen zugeführt sind, die proportional sind zu folgenden Messgrößen:
a) Lenkwinkelgeschwindigkeit (HS) des Fahrzeugs,
b) Stand-by-Drehgeschwindigkeit (n_{standby}) der Hydraulikpumpe (P),
c) Eingangsstrom (I_{Mot}) des Elektromotors (E),
• diese drei Steuergrößen sind im Steuergerät (ECU) über jeweils ein Übertragungsglied (f_{(HS)}, f_{(Imot)}, k) einem Addierer (A) zugeführt,
• der Ausgang des Addierers (A) ist mit einem ersten Eingang eines Multiplizierers (M) verbunden, der den Sollwert (n_{Mot}) liefert,
• ein zweiter Eingang des Multiplizierers (M) ist über ein viertes Übertragungsglied (f_{(VS)}) von einer vierten Steuergröße gespeist, die der Fahrzeuggeschwindigkeit (VS) proportional ist.

3. Lenkeinrichtung nach Anspruch 2, **dadurch gekennzeichnet, dass** das Übertragungsglied (f_{(Imot)}) für die Steuergröße, welche den Eingangsstrom (I_{Mot}) des Elektromotors (E) repräsentiert, einen Tiefpass aufweist.

4. Lenkeinrichtung nach Anspruch 2 oder 3, **dadurch gekennzeichnet, dass** das vierte Übertragungsglied (f_{(VS)}) eine Übertragungsfunktion aufweist, durch welche dem zweiten Eingang des Motorreglers (M) mit steigender Fahrzeuggeschwindigkeit (VS) ein abfallendes Signal zugeführt wird.

## Claims

1. Method for determining the theoretical rotational speed (n_{Mot}) of an electric motor (E) which drives a hydraulic pump (P) in a vehicle and is controlled as a function of the vehicle speed (VS),
**characterized in that**
at least three control variables which are proportional to the following measured variables:
a) steering angular speed (HS) of the vehicle,
b) standby rotational speed (n_{standby}) of the hydraulic pump (P)
c) input current (I_{Mot}) of the electric motor (E),
are multiplied by a variable in each case before or after they are influenced by associated transmission elements (f_{(HS)}, f_{(Imot)}, k), the said variable decreasing as the vehicle speed (VS) increases.

2. Steering device for a vehicle, having a hydraulic pump (P) which is driven by an electric motor (E) which is controlled as a function of the vehicle speed (VS),
**characterized by the following features:**
• a motor regulator (PCU) is connected ahead of the electric motor (E), the said regulator being given a theoretical value (n_{Mot}) for the motor rotational speed and controlling the supply voltage of the electric motor (E) accordingly,
• the theoretical value (n_{Mot}) is supplied by a controller (ECU) which is fed at least three control variables which are proportional to the following measured variables:
a) steering angular speed (HS) of the vehicle,
b) standby rotational speed (n_{standby}) of the hydraulic pump (P),
c) input current (I_{Mot}) of the electric motor (E),
• these three control variables are fed to an adder (A) in the controller (ECU) via in each case one transmission element (f_{(HS)}, f_{(Imot)}, k),
• the output of the adder (A) is connected to a first input of a multiplier (M) which supplies the theoretical value (n_{Mot}),
• a second input of the multiplier (M) is fed a fourth control variable, which is proportional to the vehicle speed (VS), via a fourth transmission element (f_{(VS)}).

3. Steering device according to Claim 2, **characterized in that** the transmission element (f_{(Imot)}) for the control variable which represents the input current (I_{Mot}) of the electric motor (E) has a low-pass filter.

4. Steering device according to Claim 2 or 3, **characterized in that** the fourth transmission element (f_{(VS)}) has a transmission function, by means of which the second input of the motor regulator (M) is fed a falling signal as the vehicle speed (VS) increases.

## Revendications

1. Procédé en vue de la détermination de la vitesse de rotation théorique (n_{Mot}) d'un moteur électrique (E) qui entraîne une pompe hydraulique (P) dans un véhicule et qui est commandé en fonction de la vitesse du véhicule (VS),
**caractérisé en ce qu'**au moins trois grandeurs de commande qui sont proportionnelles aux grandeurs de mesure suivantes :
a) vitesse d'angle de direction (HS) du véhicule,
b) vitesse de rotation en mode d'attente (n_{standby}) de la pompe hydraulique (P),
c) courant d'entrée (I_{Mot}) du moteur électrique (E),
sont multipliées à chaque fois avant ou après l'influence par des membres de transmission associés (f_{(HS)}, f_{(Imot)}, k) par une grandeur qui décroît à mesure que la vitesse du véhicule (VS) augmente.

2. Dispositif de direction pour un véhicule possédant une pompe hydraulique (P) qui est entraînée par un moteur électrique (E) qui est commandé en fonction de la vitesse du véhicule (VS),
**caractérisé par les caractéristiques suivantes :**
. un régulateur de moteur (PCU) auquel une valeur théorique (n_{Mot}) pour la vitesse de rotation du moteur est prédéfinie et qui commande en conséquence la tension d'alimentation du moteur électrique (E) est monté en amont du moteur électrique (E),
. la valeur théorique (n_{Mot}) est délivrée par un appareil de commande (ECU) auquel sont acheminées au moins trois grandeurs de commande qui sont proportionnelles aux grandeurs de mesure suivantes :
a) vitesse d'angle de direction (HS) du véhicule,
b) vitesse de rotation en mode d'attente (n_{standby}) de la pompe hydraulique (P),
c) courant d'entrée (I_{Mot}) du moteur électrique (E),
. ces trois grandeurs de commande sont acheminées dans l'appareil de commande (ECU) par l'intermédiaire d'un membre de transmission (f_{(HS)}, f_{(imot),} k) à chaque fois à un dispositif additionneur (A),
. la sortie du dispositif additionneur (A) est reliée à une première entrée d'un dispositif multiplicateur (M) qui délivre la valeur théorique (n_{Mot}),
. une deuxième entrée du dispositif multiplicateur (M) est alimentée par l'intermédiaire d'un quatrième membre de transmission (f_{(VS)}) par une quatrième grandeur de commande qui est proportionnelle à la vitesse du véhicule (VS).

3. Dispositif de direction selon la revendication 2, **caractérisé en ce que** le membre de transmission (f_{(Imot)}) présente un passe-bas pour la grandeur de commande qui représente le courant d'entrée (I_{Mot}) du moteur électrique (E).

4. Dispositif de direction selon la revendication 2 ou 3, **caractérisé en ce que** le quatrième membre de transmission (f_{(VS)}) présente une fonction de transmission par laquelle un signal décroissant est acheminé à la deuxième entrée du régulateur de moteur (M) à mesure que la vitesse du véhicule (VS) augmente.
